# EUROPÄISCHE PATENTANMELDUNG

(11) **EP 0 786 364 A1**
(43) Veröffentlichungstag der Anmeldung: **30.07.1997**
(21) Anmeldenummer: 97890014.0
(22) Anmeldetag: 21.01.1997
(51) Int. Cl.: B60J 3/02

(54) **Blendschutz für Kraftfahrzeuge**

(30) Priorität: 23.01.1996 AT 107/96
(71) Anmelder: Prokesch, Albin, 4020 Linz (AT)
(72) Erfinder: Prokesch, Albin, 4020 Linz (AT)
(74) Vertreter: Hübscher, Heiner, Dipl.-Ing.

(57) **Zusammenfassung**

Ein Blendschutz für Kraftfahrzeuge (1) weist eine im Innenbereich der Frontscheibe (2) angeordnete Blende (3) auf. Um einen wirkungsvollen Blendschutz gegen das Scheinwerferlicht bei nächtlichem Gegenverkehr zu erreichen, besteht die Blende (3) aus einem Abdeckstreifen (4), der sich in Wirkstellung etwa scheibenparallel vom unteren Eckbereich (21) der fahrerseitigen Scheibenhälfte (22) schräg aufwärts bis in deren Mittenbereich (23) erstreckt und dabei vorzugsweise bogenförmig von einem Diagonalabschnitt (41) in einen Horizontalabschnitt (42) übergeht.

## Beschreibung

Die Erfindung bezieht sich auf einen Blendschutz für Kraftfahrzeuge mit einer im Bereich der Frontscheibe des Fahrzeuges angeordneten Blende.

Bekannte Blenden aus im wesentlichen rechteckigen Blendschirmen sind im oberen Längsrandbereich der Frontscheibe verschwenkbar angelenkt und dienen ausschließlich als Sonnenblende, die in der Dunkelheit als Schutz gegen eine Blendung durch Scheinwerfer entgegenkommender Fahrzeuge vollkommen nutzlos ist.

Der Erfindung liegt daher die Aufgabe zugrunde, einen einfachen und doch wirkungsvollen Blendschutz für den Fahrer eines Kraftfahrzeuges gegen die nächtlichen Scheinwerferblendungen durch den Gegenverkehr auf der Straße zu schaffen.

Die Erfindung löst diese Aufgabe dadurch, daß die Blende aus einem Abdeckstreifen besteht, der sich in Wirkstellung etwa scheibenparallel vom unteren Eckbereich der fahrerseitigen Scheibenhälfte schräg aufwärts bis in deren Mittenbereich erstreckt und dabei vorzugsweise bogenförmig von einem Diagonalabschnitt in einen Horizontalabschnitt übergeht. Da beim gegenseitigen Vorbeifahren zweier Fahrzeuge in den meisten Fällen die Scheinwerfer des einen Fahrzeuges für den Fahrer des anderen Fahrzeuges im Richtungsbereich des Geradeaussehens auftauchen und dann zum fahrerseitigen unteren Scheibeneckbereich wandem, auf welchem Weg die Scheinwerfer den Fahrer blenden können, läßt sich durch den Abdeckstreifen genau diese Relativbewegungsbahn der Scheinwerfer entgegenkommender Fahrzeuge abschirmen und der Augenbereich des Fahrers abdunkeln, so daß es zu keiner Blendung des Fahrers durch die Scheinwerfer des Gegenverkehrs kommt. Da automatisch der Fahrer mit leichten Kopfbewegungen die Augen im Abdunkelungsbereich des Abdeckstreifens halten kann, sind auch auftretende Abweichungen der Scheinwerferbahn auf Grund unterschiedlicher Fahrergrößen, Fahrzeugkonstruktionen, Straßenführungen u. dgl. ohne Schwierigkeiten und ohne die Fahrsicherheit zu beeinträchtigen auszugleichen.

Da der Abdeckstreifen verhältnismäßig schmal ausgebildet sein kann, behindert er den Sichtbereich des Fahrers nur unmerklich, wobei vorteilhafterweise ein durchsichtiger, aber dunkler Abdeckstreifen Verwendung findet, der ähnlich einer Sonnenbrille lediglich das einfallende Licht abdunkelt, nicht aber vollständig abdeckt. Ist dabei der Abdeckstreifen zu den Längsrändem hin zunehmend aufgehellt, ergibt sich ein gleichmäßiger Übergang vom hellen zum dunklen Bereich und es entstehen trotz einer guten Schutzwirkung einwandfreie Sichtverhältnisse.

Grundsätzlich spielt es keine Rolle, wie der Abdeckstreifen im Frontscheibenbereich montiert wird, wobei er zweckmäßigerweise aus der Wirkstellung entfembar sein soll, um bei Tageslicht nicht zu stören. Der Abdeckstreifen läßt sich beispielsweise als Folie od. dgl. unmittelbar an der Frontscheibe abnehmbar anheften, er kann aber auch als flacher Kunststoffstreifen frei vorkragend an einem Halter befestigt sein, der schiebeverstellbar und/oder abnehmbar an einer im Seitenrandbereich der Frontscheibe vorgesehenen Führung angreift. Mit diesem Halter kann der Abdeckstreifen in der Höhenlage an die jeweilige Fahrergröße bzw. Augenhöhe angepaßt werden, er kann mit einem Handgriff aus der Wirkstellung in eine Ruhestellung hinauf unter die Sonnenblende oder hinunter zum Armaturenbrett verschoben oder überhaupt durch eine Art Klipsverbindung von der Führung abgenommen werden.

Eine vorteilhafte Weiterbildung der Erfindung ergibt sich dadurch, daß der Abdeckstreifen in die Frontscheibe integriert ist, wobei vorzugsweise die Frontscheibe als Abdeckstreifen einen Streifenbereich aufweist, der die Lichtdurchlässigkeit in einer über eine Steuerungseinrichtung vorwählbaren Stärke beeinflussende Einlagerungen od. dgl. enthält. Diese integrierten Abdeckstreifen sind ohne jede störende Nebenwirkung und lassen sich durch Einschalten wie etwa eine Scheibenheizung aktivieren, so daß die meist kristallinen Einlagerungen, beispielsweise durch Anlegen einer elektrischen Spannung, zu einer entsprechenden Verdunkelung der Scheibe und damit zum gewünschten Blendschutz führen.

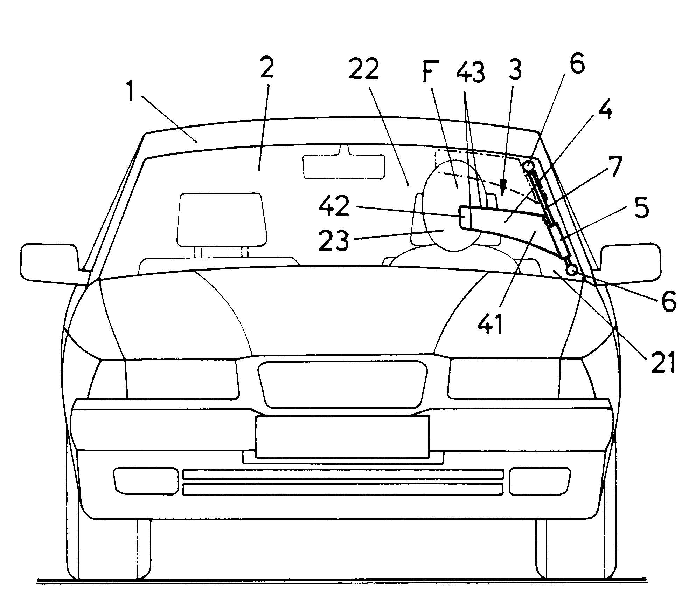

In der Zeichnung ist der Erfindungsgegenstand beispielsweise an Hand eines mit einem erfindungsgemäßen Blendschutz ausgestatteten Kraftfahrzeuges in schematischer Vorderansicht dargestellt.

Um den Fahrer F eines Fahrzeuges 1 gegen die Blendung durch die Scheinwerfer des Gegenverkehrs schützen zu können, ist im Innenbereich der Frontscheibe 2 eine Blende 3 angeordnet, die aus einem sich in der dargestellten Wirkstellung etwa scheibenparallel vom unteren Eckbereich 21 der fahrerseitigen Scheibenhälfte 22 schräg aufwärts bis in den Mittenbereich 23 dieser Scheibenhälfte 22 erstreckenden Abdeckstreifen 4 besteht, wobei dieser Abdeckstreifen 4 bogenförmig von einem Diagonalabschnitt 41 in einen Horizontalabschnitt 42 übergeht. Der Abdeckstreifen 4 ist aus durchsichtigem, aber dunklem Kunststoffmaterial hergestellt und wird von der Längsmitte zu den Längsrändem 43 hin zunehmend heller. Der Abdeckstreifen 4 sitzt frei vorkragend an einem Halter 5, der schiebeverstellbar an einer im Seitenrandbereich der Frontscheibe 2 über Saugnäpfe 6 befestigten stangenförmigen Führung 7 angreift, so daß die Blende 4 durch ein entsprechendes Schiebeverstellen des Abdeckstreifens 4 an die jeweilige Augenhöhe des Fahrers F angepaßt und auch aus der Wirkstellung in eine Ruhestellung (strichpunktierte Darstellung) hochgeschoben werden kann.

Die erfindungsgemäße Blende ergibt einen einfachen und doch überaus wirkungsvollen Blendschutz bei nächtlichem Gegenverkehr und läßt sich problemlos als Fahrzeugzubehör nachträglich auf verschiedenste Art und Weise einbauen oder selbstverständlich auch von vomherein bei der Fahrzeuggrundausstattung berücksichtigen.

## Patentansprüche

1. Blendschutz für Kraftfahrzeuge (1) mit einer im Bereich der Frontscheibe (2) des Fahrzeuges (1) angeordneten Blende (3), dadurch gekennzeichnet, daß die Blende (3) aus einem Abdeckstreifen (4) besteht, der sich in Wirkstellung etwa scheibenparallel vom unteren Eckbereich (21) der fahrerseitigen Scheibenhälfte (22) schräg aufwärts bis in deren Mittenbereich (23) erstreckt und dabei vorzugsweise bogenförmig von einem Diagonalabschnitt (41) in einen Horizontalabschnitt (42) übergeht.

2. Blendschutz nach Anspruch 1, dadurch gekennzeichnet, daß der durchsichtige, aber dunkle Abdeckstreifen (4) zu den Längsrändem (43) hin zunehmend aufgehellt ist.

3. Blendschutz nach Anspruch 1 oder 2, dadurch gekennzeichnet, daß der Abdeckstreifen (4) frei vorkragend an einem Halter (5) befestigt ist, der schiebeverstellbar und/oder abnehmbar an einer im Seitenrandbereich der Frontscheibe (2) vorgesehenen Führung (7) angreift.

4. Blendschutz nach Anspruch 1 oder 2, dadurch gekennzeichnet, daß der Abdeckstreifen in die Frontscheibe integriert ist.

5. Blendschutz nach Anspruch 4, dadurch gekennnzeichnet, daß die Frontscheibe als Abdeckstreifen einen Streifenbereich aufweist, der die Lichtdurchlässigkeit in einer über eine Steuerungseinrichtung vorwählbaren Stärke beeinflussende Einlagerungen od. dgl. enthält.
